# EUROPÄISCHE PATENTANMELDUNG

(11) **EP 1 503 090 A1**
(43) Veröffentlichungstag der Anmeldung: **02.02.2005**
(21) Anmeldenummer: 03102386.4
(22) Anmeldetag: 31.07.2003
(51) Int. Cl.: F16B 11/00, B62D 25/10, B32B 35/00

(54) **Befestigungsverfahren für eine Sandwichstruktur**

(71) Anmelder: Ford Global Technologies, LLC, A subsidary of Ford Motor Company, Dearborn, MI 48126 (US)
(72) Erfinder: Müller, Guido, 50767 Köln (DE); Stadtler, Arnold, 50935, Koeln (DE); Grunewald, Ulrich, 50823, Köln (DE)
(74) Vertreter: Drömer, Hans-Carsten, Dr.-Ing.

(57) **Zusammenfassung**

Die Erfindung betrifft eine Sandwichstruktur (1) sowie ein Verfahren, mit dem an einer Sandwichstruktur (1), die zumindest eine erste und eine zweite Sandwichschale (2, 3) sowie wenigstens einen zwischen den Sandwichschalen (2, 3) angeordneten Leichtbaukern (4) aufweist, ein Anbauelement (5) befestigt wird, wobei zwecks Montage des Anbauelements (5) die erste Sandwichschale (3) mit wenigstens einer Befestigungsöffnung (3a, 3b) versehen wird, dass der Leichtbaukern (4) in dem Bereich der Befestigungsöffnung (3a, 3b) entfernt wird, und dass das Anbauelement (5) auf die erste Sandwichschale (3) aufgesetzt und ein stoffschlüssiges Verbindungsmittel (V) zugefügt wird, wobei durch das stoffschlüssige Verbindungsmittel (V) eine Verbindung beider Sandwichschalen (2, 3) mit dem Anbauelement (5) hergestellt wird.

## Beschreibung

Die Erfindung betrifft eine Sandwichstruktur sowie ein Verfahren, mit dem an einer Sandwichstruktur ein Anbauelement befestigt wird, wobei die Sandwichstruktur zumindest eine erste und eine zweite Sandwichschale sowie wenigstens einen zwischen den Sandwichschalen angeordneten Leichtbaukern aufweist.

Derlei Sandwichstrukturen finden beispielsweise als Klappen-, Hauben-, oder Verschlussbauelemente im Fahrzeug- und Flugzeugbau Anwendung, weil dort Leichtbau erforderlich ist. Sie weisen ein günstiges Verhältnis zwischen Steifigkeit und Gewicht auf, eine hohe Fähigkeit zur Absorption der Aufprallenergie, beispielsweise bei einem Aufprallunfall eines Kraftfahrzeugs sowie gute Eigenschaften zur Vibrations- und Geräuschdämpfung.

Sandwichstrukturen, die als Klappen-, Hauben- oder Verschlussbauelemente beweglich angebracht sein müssen, benötigen Anbauelemente, wie Scharniere und Schließteile. Andere Anbauelemente dienen beispielsweise der äußerlichen Verstärkung einer Sandwichstruktur. Die Befestigung derartiger Anbauelemente an einer Sandwichstruktur ist ein technisches Problem, weil aus Gewichtsgründen üblicherweise dünne Metallbleche oder Kunststoff als Sandwichschale verwendet werden. Besteht die Sandwichschale beispielsweise aus einem nur 0,2 mm dicken Blech, erschwert dies die Befestigung eines Anbauelements mittels gängiger Verfahren, wie Klebung oder Schweißung auf der Oberfläche der Sandwichstruktur.

Aus der EP 1 083 115 A1 ist eine Sandwichstruktur in Form einer Kraftfahrzeughaube bekannt. Zwecks Befestigung von Anbauelementen schlägt die EP 1 083 115 A1 verschiedene Ausführungsformen von Verstärkungsmitteln vor. Anbauelemente, wie Scharniere oder Schließelemente sind aus Stabilitätsgründen an diesen besonderen Verstärkungsmitteln angebracht.

Aus dem genannten Stand der Technik ergibt sich die technische Aufgabe, eine Sandwichstruktur sowie ein Verfahren zur Befestigung eines Anbauelements an einer Sandwichstruktur vorzuschlagen, mit der das Gewicht der gesamten Konstruktion reduziert werden kann.

Erfindungsgemäß wird die Aufgabe dadurch gelöst, dass zwecks Montage des Anbauelements die erste Sandwichschale mit wenigstens einer Befestigungsöffnung versehen wird, dass der Leichtbaukern in dem Bereich der Befestigungsöffnung entfernt wird, und dass das Anbauelement auf die erste Sandwichschale aufgesetzt und ein stoffschlüssiges Verbindungsmittel zugefügt wird, wobei durch das stoffschlüssige Verbindungsmittel eine Verbindung beider Sandwichschalen mit dem Anbauelement hergestellt wird.

Die Mechanik einer Sandwichstruktur gleicht vereinfacht betrachtet der eines Doppel-T-Trägers. Die beiden Sandwichschalen entsprechen den Flanschen des Doppel-T-Trägers. Der dazwischenliegende Leichtbaukern ist dem Steg des Doppel-T-Trägers analog. Eine Sandwichstruktur erhält somit ihren Widerstand gegen Biegung und Torsion im wesentlichen durch den Leichtbaukern. Der Vorteil des vorgeschlagenen Verfahrens besteht darin, auch das Verbindungsmittel zwischen den beiden Sandwichschalen anzuordnen und auf diese Weise jedes Anbauelement an die beiden sich gegenüberliegenden Sandwichschalen zu binden. Die Methode erhöht durch das versteifend zwischen den Sandwichschalen angeordnete Verbindungsmittel den Widerstand der verbundenen Strukturen und Elemente insgesamt gegen Biegung und Torsion.

Eine Sandwichstruktur, die aus mehreren in Schichten hintereinander geschalteter Sandwichschalen und Leichtbaukernen aufgebaut ist, kann mit einem Verbindungsmittel versehen sein, das die Sandwichstruktur von einer äußeren Sandwichschale zur gegenüberliegenden äußeren Sandwichschale durchdringt. Ein Anbauelement ist auf diese Weise mit beiden äußeren Sandwichschalen verbunden.

Mit dem neuen Verfahren bleiben Verstärkungsmittel erspart, wie beispielsweise die aus EP 1 083 115 A1 bekannten Blechpressteile, die auf der Innenseite einer Kraftfahrzeughaube angebracht werden müssen. Nur um eine Basis zur Anbringung von Scharnieren und Schließelementen zu haben, mit denen eine Kraftfahrzeughaube an einer Karosserie angelenkt beziehungsweise daran verschließbar ist, musste bisher das Zusatzgewicht von Verstärkungsmitteln in Kauf genommen werden.

Der Leichtbau kann konsequent fortgeführt werden, indem die benötigten Anbauelemente, wie Scharniere und Schließelemente an das reduzierte Gewicht der Sandwichstruktur angepasst werden. Es genügt beispielsweise ein Scharnier mit geringerer Festigkeit. Die geringere Festigkeit ist in der Regel mit weniger Material erreichbar.

Günstigerweise wird zur Herstellung des stoffschlüssigen Verbindungsmittels ein Klebstoff verarbeitet. Je nach Art der Sandwichstruktur kann ein Klebstoff mit geeigneter Abbindungsart verwendet werden. Für Sandwichstrukturen mit warmaushärtenden Aluminiumblechen eignet sich beispielsweise ein solcher Klebstoff, der keine oder nur eine mäßige Wärmeeinbringung zur Abbindung benötigt, um den Aluminiumwerkstoff nicht zu entfestigen. Besonders geeignet sind chemisch reagierende Mehrkomponentenklebstoff, die ein geeignetes Härterzusatzmittel beinhalten und mit geringer Wärmeeinbringung abbinden. Mit einem geeigneten Klebstoff lassen sich unter anderem die Taktzeiten zur Herstellung der Verbindung in einer Fertigungsstrasse minimieren.

Eine höhere Festigkeit der Verbindung wird erreicht, wenn zur Herstellung des stoffschlüssigen Verbindungsmittels ein Lotwerkstoff verarbeitet wird. Hierbei werden die zu verbindenden Teile, nämlich die Sandwichschalen und ein aufgesetztes Anbauelement mit Lot benetzt und dadurch miteinander verbunden. Ein zugesetztes oder in dem Lotwerkstoff enthaltenes Flussmittel kann den festen Anschluss des Lotes an der Oberfläche der zu verbindenden Bauteile fördern. Je nach benötigter Festigkeit und Wärmezufuhr werden Weichlote oder Hartlote verarbeitet.

Um Platz für das stoffschlüssige Verbindungsmittel zu schaffen, kann der Leichtbaukern im Bereich der Befestigungsöffnung mit einem trennenden Bearbeitungsverfahren entfernt werden, beispielsweise spanabhebend.

Anstelle einer mechanischen Entfernung des Leichtbaukerns kann dieser besonders einfach mit einem Verfahren entfernt werden, bei dem der Leichtbaukern durch direkte Einwirkung eines heißflüssigen Verbindungsmittels weggeschmolzen, verbrannt oder geschrumpft wird. Auf diese Weise wird ein gesonderter trennender Verfahrensschritt zur Entfernung des Leichtbaukerns eingespart.

Weiterhin kann der Leichtbaukern aus einem mittels eines Lösungsmittels leicht lösbaren Werkstoff bestehen, so daß der Leichtbaukern im Bereich der Verbindungsöffnungen durch Anwendung des entsprechenden Lösungsmittels entfernt wird. Die Anwendung des Lösungsmittels kann separat vom Verbindungsmittel erfolgen, oder das Lösungsmittel ist dem Verbindungsmittel beigemengt oder wird parallel aufgetragen.

Ein weiterer Vorteil wird darin gesehen, dass das Anbauelement zumindest eine Verbindungsöffnung aufweist, dass die Verbindungsöffnung des Anbauelements über der Befestigungsöffnung der ersten Sandwichschale positioniert wird und das stoffschlüssige Verbindungsmittel durch die Verbindungsöffnung und die Befestigungsöffnung in die Sandwichstruktur transportiert wird.

Es gibt Standardbauteile verschiedenster Art als Anbauelemente, die bisher auf konventionelle Art befestigt, beispielsweise an Verstärkungsteilen angeschraubt oder festgenietet wurden. Hierfür weisen bekannte Anbauelemente Verbindungsöffnungen zum Durchstecken der Schraube oder des Niets auf.

Ein besonderer Nutzen des vorgeschlagenen Verfahrens wird darin gesehen, dass vorhandene standardisierte Anbauelemente beibehalten und ohne zusätzliche Verstärkungsmittel direkt an der Sandwichstruktur angebracht werden können. Hierin liegt ein großes Einsparpotential, weil auf die Entwicklung spezieller Anbauelemente verzichtet werden kann.

Dem Konstrukteur bieten sich durch die vorgeschlagene Technik zweierlei Konzepte. Einerseits die Verwendung modifizierter Anbauelemente, deren Festigkeit an das reduzierte Gewicht der Sandwichstruktur angepasst sind und auf diese Weise den Leichtbau fördern. Andererseits die Verwendung von Standardbauteilen und Einsparung von Entwicklungskosten unter Verzicht auf eine Gewichtsreduktion. Selbstverständlich kann auch eine Änderung standardisierter Anbauelemente in Betracht gezogen werden, um trotz Einsparung von Entwicklungskosten eine Materialreduzierung zu erreichen, indem beispielsweise von einem Standardbauteil, das für die leichte Sandwichstruktur überdimensioniert ist, an unkritischer Stelle Material abgetrennt wird.

Zur Lösung des technischen Problems wird eine Sandwichstruktur mit wenigstens einer ersten und einer zweiten Sandwichschale, mit wenigstens einem Leichtbaukern zwischen den Sandwichschalen sowie mit wenigstens einem an einer der Sandwichschalen aufgesetzten Anbauelement vorgeschlagen, wobei das Anbauelement mit einem der oben genannten Verfahren an der Sandwichstruktur angebracht ist.

Die Sandwichstruktur kann Sandwichschalen aus Metallblech aufweisen, beispielsweise Stahlblech mit oder ohne Korrosionsschutz. Zwecks Korrosionsschutz wird beispielsweise verzinktes Stahlblech verwendet. Alternativ können die Sandwichschalen aus Aluminiumblech gefertigt sein. Der Leichtbaukern kann aus Kunststoff bestehen, beispielsweise aus Polypropylen. Aus Gewichtsgründen eignet sich geschäumter Kunststoff. Als Alternative stehen Metallstrukturen für den Leichtbaukern zur Verfügung, beispielsweise Wabenstrukturen wie die bekannten Honeycomb-Kerne. Darüber hinaus kann ein Leichtbaukern aus einer geschäumten Mischung aus Kunststoff und Metall bestehen.

Nachstehend ist die Erfindung beispielhaft in einer Zeichnung dargestellt und anhand der Figuren detailliert beschrieben. Es zeigen:
- Fig. 1: eine ausschnittsweise Darstellung einer Sandwichstruktur mit einem direkt angebrachten Anbauelement,
- Fig. 2: die Sandwichstruktur gemäß Fig. 1 mit einem alternativen Anbauelement.

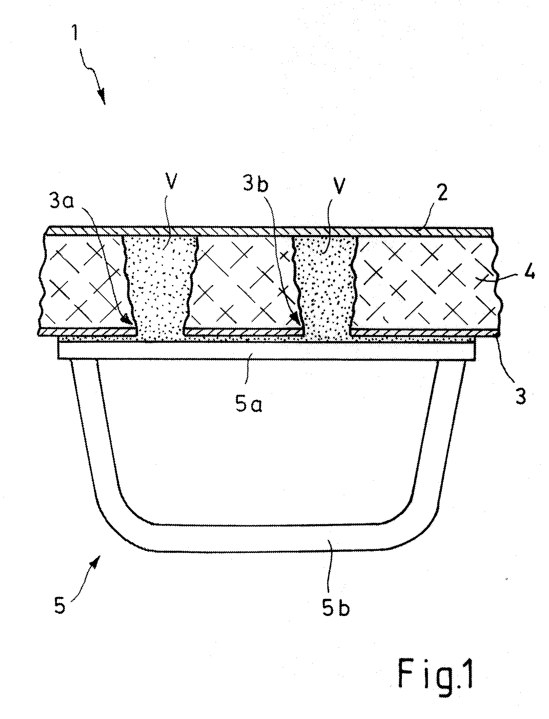

Fig. 1 zeigt eine Sandwichstruktur 1 mit einer äußeren Sandwichschale 2 sowie einer inneren Sandwichschale 3. Zwischen den Sandwichschalen 2 und 3 und mit diesen verbunden ist ein Leichtbaukern 4. Der Leichtbaukern 4 besteht im vorliegenden Fall aus geschäumtem Polypropylen. Die Sandwichstruktur dient als Motorhaube eines Kraftfahrzeugs. Auf der inneren Sandwichschale ist ein Anbauelement 5 aufgesetzt. Es handelt sich um ein Schließelement, mit dem die Motorhaube in der Frontkonstruktion einer Fahrzeugkarosserie verriegelt wird. Das Anbauelement 5 weist eine Platte 5a sowie einen Bügel 5b auf. Die innere Sandwichschale 3 ist mit zwei Befestigungsöffnungen 3a und 3b versehen worden. Außerdem ist der hinter den Befestigungsöffnungen 3a beziehungsweise 3b liegende Bereich des Leichtbaukerns entfernt worden, so dass ein Hohlraum entstand. Anschließend wurde ein stoffschlüssiges Verbindungsmittel V in die Öffnungen des Leichtbaukerns eingefüllt, das abbgebunden und sich durch Adhäsion mit der freigelegten Innenseite der äußeren Sandwichschale 2 verbunden hat.

Bei dem stoffschlüssigen Verbindungsmittel V handelt es sich um einen Klebstoff, der aus fertigungstechnischen Gründen günstigerweise eine rasche Abbindung ermöglicht. Selbstverständlich kann die dargestellte Ausführung einer Verbindung auch mit einem Lotwerkstoff ausgeführt sein.

Aufgesetzt auf die innere Sandwichschale 3 wurde die Platte 5a des Anbauelements 5, die ebenfalls durch Adhäsion an dem stoffschlüssigen Verbindungsmittel V anhaftet. Das Verbindungsmittel V kann entweder ausschließlich in dem Bereich der Befestigungsöffnungen 3a und 3b mit der Platte 5a in Kontakt sein oder, wie in dem vorliegenden Ausführungsbeispiel, einen dünnen Film zwischen der inneren Sandwichschale 2 und der Platte 5a bilden.

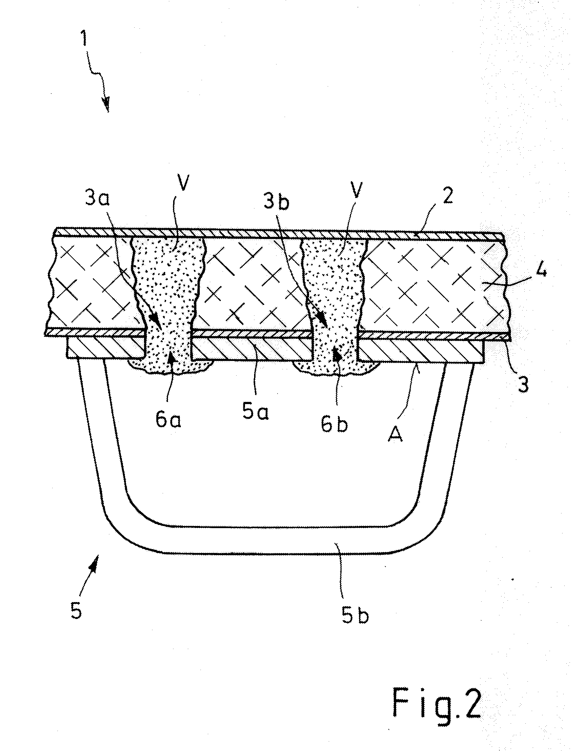

Fig. 2 zeigt eine weitere Sandwichstruktur 1 mit daran befestigtem Anbauelement 5. Gleiche Merkmale sind in Fig. 2 zwecks einfacher Wiedererkennbarkeit mit den gleichen Bezugszeichen versehen, wie in Fig. 1.

Das Anbauelement 5 der Fig. 2 unterscheidet sich von dem Anbauelement 5 gemäß Fig. 1 durch zwei Verbindungsöffnungen 6a und 6b, die in einer Platte 5a vorgesehen sind. Bei der Herstellung der Verbindung ist wiederum eine innere Sandwichschale 3 mit Befestigungsöffnungen 3a und 3b versehen worden, durch die im Anschluss daran Bereiche des Leichtbaukerns 4 entfernt wurden, sodass eine Innenseite der äußeren Sandwichschale 2 an den entsprechenden Stellen frei lag. Die Befestigungsöffnungen 3a und 3b weisen den gleichen Abstand voneinander auf, wie die Verbindungsöffnungen 6a und 6b des Anbauelements 5.

Generell werden bei Anbauelementen mit mehr als zwei Verbindungsöffnungen so viele Verbindungsöffnungen, wie benötigt, zur Anbringung an der Sandwichstruktur verwendet, wobei für die Befestigungsöffnungen, die an der inneren Sandwichschale hergestellt werden müssen, ein im wesentlichen übereinstimmendes Lochbild vorgesehen wird, wie das Lochbild der Verbindungsöffnungen des Anbauelements. Allerdings müssen die Verbindungsöffnungen nicht übereinstimmen, wenn z. B. am Rand oder in einer Aussparung des Anbauelements die Verbindung hergestellt wird. In diesem Fall sind die Lochbilder unterschiedlich, wichtig ist nur, daß das Verbindungsmittel mit allen drei zu verbindenden Teilen in Berührung kommt.

Zur Verbindung der Sandwichstruktur 1 und des Anbauelements 5 wurde ein stoffschlüssiges Verbindungsmittel V durch die Verbindungsöffnungen 6a und 6 b sowie die Befestigungsöffnungen 3a und 3b in die Sandwichstruktur 1 transportiert und hat den in dem Leichtbaukern entstandenen Hohlraum ausgefüllt. Auf der Innenseite der äußeren Sandwichschale 2 haftet das stoffschlüssige Verbindungsmittel V durch Adhäsion an. Das gleiche gilt zwischen dem stoffschlüssigen Verbindungsmittel V und den Befestigungsöffnungen 3a und 3b, die ebenfalls durch Adhäsion verbunden sind. Auf einer Oberseite A der Platte 5a, die der Sandwichstruktur abgewandt ist, ragt das stoffschlüssige Verbindungsmittel V in radialer Richtung über die Befestigungsöffnung 3a hinaus und bildet etwa die Form eines Nietkopfes. Das gleiche gilt für das stoffschlüssige Verbindungsmittel V an der Befestigungsöffnung 3b.

Bei dem stoffschlüssigen Verbindungsmittel V handelt es sich um einen Lotwerkstoff, der eine besonders hohe Festigkeit der Verbindung gewährleistet. Aus fertigungstechnischen Gründen kann die dargestellte Ausführung einer Verbindung auch mit einem Klebstoff ausgeführt sein.

## Patentansprüche

1. Verfahren, mit dem an einer Sandwichstruktur (1) ein Anbauelement (5) befestigt wird, wobei die Sandwichstruktur (1) zumindest eine erste und eine zweite Sandwichschale (2, 3) sowie wenigstens einen zwischen den Sandwichschalen (2, 3) angeordneten Leichtbaukern (4) aufweist, **dadurch gekennzeichnet, dass** zwecks Montage des Anbauelements (5) die erste Sandwichschale (3) mit wenigstens einer Befestigungsöffnung (3a, 3b) versehen wird, dass der Leichtbaukern (4) in dem Bereich der Befestigungsöffnung (3a, 3b) entfernt wird, und dass das Anbauelement (5) auf die erste Sandwichschale (3) aufgesetzt und ein stoffschlüssiges Verbindungsmittel (V) zugefügt wird, wobei durch das stoffschlüssige Verbindungsmittel (V) eine Verbindung beider Sandwichschalen (2, 3) mit dem Anbauelement (5) hergestellt wird.

2. Verfahren nach Anspruch 1, **dadurch gekennzeichnet, dass** zur Herstellung des stoffschlüssigen Verbindungsmittels (V) Klebstoff verarbeitet wird.

3. Verfahren nach Anspruch 1, **dadurch gekennzeichnet, dass** zur Herstellung des stoffschlüssigen Verbindungsmittels (V) ein Lotwerkstoff verarbeitet wird.

4. Verfahren nach einem der Ansprüche 1 bis 3, **dadurch gekennzeichnet, dass** der Leichtbaukern (4) in dem Bereich der Befestigungsöffnungen (3a, 3b) durch Einwirkung eines heißflüssigen stoffschlüssigen Verbindungsmittels (V) entfernt wird.

5. Verfahren nach einem der Ansprüche 1 bis 3, **dadurch gekennzeichnet, dass** der Leichtbaukern (4) in dem Bereich der Befestigungsöffnungen (3a, 3b) durch Einwirkung eines Lösungsmittels entfernt wird.

6. Verfahren nach einem der Ansprüche 1 bis 5, **dadurch gekennzeichnet, dass** das Anbauelement (5) zumindest eine Verbindungsöffnung (5a, 5b) aufweist, dass die Verbindungsöffnung (5a, 5b) des Anbauelements (5) über der Befestigungsöffnung (3a, 3b) der ersten Sandwichschale (3) positioniert wird und das stoffschlüssige Verbindungsmittel (V) durch die Verbindungsöffnung (5a, 5b) und die Befestigungsöffnung (3a, 3b) in die Sandwichstruktur (1) transportiert wird.

7. Sandwichstruktur (1) mit wenigstens einer ersten und einer zweiten Sandwichschale (2, 3), mit wenigstens einem Leichtbaukern (4) zwischen den Sandwichschalen (2, 3 ) sowie mit wenigstens einem an einer der Sandwichschalen (2, 3) aufgesetzten Anbauelement (5), **dadurch gekennzeichnet, dass** das Anbauelement (5) mit einem Verfahren nach einem der Ansprüche 1 bis 4 an der Sandwichstruktur (1) angebracht ist.
